# EUROPEAN PATENT APPLICATION

(11) **EP 3 780 206 A1**
(43) Date of publication of application: **17.02.2021**
(21) Application number: 19785237.9
(22) Date of filing: 28.02.2019
(51) Int. Cl.: H01M 8/1226, H01M 4/86, H01M 4/88, H01M 8/124, H01M 8/12

(54) **METAL-SUPPORTED CELL AND METHOD FOR MANUFACTURING METAL-SUPPORTED CELL**

(30) Priority: 13.04.2018 JP 2018077551
(71) Applicant: NISSAN MOTOR CO., LTD., Yokohama-shi, Kanagawa 221-0023 (JP)
(72) Inventor: IRITSUKI, Keita, Atsugi-shi, Kanagawa 243-0123 (JP)
(74) Representative: Global IP Europe Patentanwaltskanzlei
(86) International application number: PCT/JP2019/007903
(87) International publication number: WO 2019/198372

(57) **Abstract**

[Problem] To provide a metal-supported cell and a metal-supported cell manufacturing method, in which internal residual stress is applied to an electrolyte layer, in order to prevent cracks due to thermal stress.

[Solution] A metal-supported cell 10 is configured by stacking a plurality of layers including an electrolyte layer 40, an electrode layer 50, and a metal support layer 60. The electrolyte layer has compressive residual stress along a planar direction, and, of the plurality of layers, at least one layer other than the electrolyte layer has tensile residual stress along the planar direction.

## Description

### Technical Field

The present invention relates to a metal-supported cell and a metal-supported cell manufacturing method.

### Background Art

Conventionally, metal-supported cells (MSC), which have excellent mechanical strength, rapid starting ability, etc., have been applied to solid oxide fuel cells (SOFC).

A metal-supported cell is configured by stacking a plurality of layers including an electrolyte layer, an electrode layer, and a metal support layer. There is the problem that cracks could be generated due to thermal stress in an electrolyte layer formed from a brittle ceramic.

To solve the problem described above, for example, Patent Document 1 discloses a metal-supported cell in which the difference in the amount of thermal contraction (metal support layer - electrolyte layer) is made greater than the amount of chemical contraction in the electrolyte layer at the time of manufacture, so that the compressed state of the internal stress of the electrolyte layer is maintained at the time of firing and cooling, in order to prevent cracks from being generated in the electrolyte layer.

### Prior Art Documents

### Patent Documents

Patent Document 1: Japanese Laid-Open Patent Application No. 2012-99408

### Summary of the Invention

### Problem to be Solved by the Invention

However, in the metal-supported cell of Patent Document 1 described above, although the formation of cracks can be prevented at the time of manufacture, it is still possible that cracks would still appear in the electrolyte layer due to thermal stress caused by thermal expansion and cooling contraction in areas of actual use in which operation and stopping are repeated.

In order to prevent cracks in the electrolyte layer due to thermal stress, an object of the present invention is to provide a metal-supported cell and a metal-supported cell manufacturing method, in which internal residual stress is applied to the electrolyte layer.

### Means to Solve the Problem

A metal-supported cell according to the present invention, which achieves the object described above, is configured by stacking a plurality of layers including an electrolyte layer, an electrode layer, and a metal support layer. The electrolyte layer has compressive residual stress along a planar direction, and, of the plurality of layers, at least one layer other than the electrolyte layer has tensile residual stress along the planar direction.

A metal-supported cell manufacturing method according to the present invention, which achieves the object described above, comprises stacking a plurality of layers including an electrolyte layer, an electrode layer, and a metal support layer, applying compressive residual stress to the electrolyte layer along a planar direction, and applying tensile residual stress to, of the plurality of layers, at least one layer other than the electrolyte layer, along the planar direction.

### Brief Description of the Drawings

Figure 1 is an exploded perspective view illustrating a fuel cell according to an embodiment of the present invention.
Figure 2 is an exploded perspective view of the cell unit shown in Figure 1.
Figure 3 is an exploded perspective view of a metal support cell assembly shown in Figure 2.
Figure 4 is a partial cross-sectional view of the metal support cell assembly along line A-A in Figure 2.
Figure 5 is an enlarged partial cross-sectional view illustrating a metal-supported cell shown in Figure 4.
Figure 6 is an enlarged partial cross-sectional view illustrating an electrolyte layer and an anode layer of the metal-supported cell shown in Figure 5.
Figure 7 shows a partial cross-sectional view and the stress distribution for explaining the internal stress of each layer of the metal-supported cell shown in Figure 5.
Figure 8 is a schematic view for explaining a metal-supported cell manufacturing method according to an embodiment of the present invention.
Figure 9 is a cross-sectional view illustrating the internal stress when a first anode layer is fired and cured in the firing step.
Figure 10 is a cross-sectional view illustrating the internal stress when a second anode layer is fired and cured in the firing step.
Figure 11 is an enlarged partial cross-sectional view illustrating the electrolyte layer and the anode layer shown in Figure 10.
Figure 12 is a graph illustrating the relationship between the thickness ratio of the electrolyte layer and the surface stress of the electrolyte layer in the state shown in Figure 10.
Figure 13 is a cross-sectional view illustrating the internal stress when a second metal support layer is fired and cured in the firing step.
Figure 14 is a cross-sectional view illustrating the internal stress when a first metal support layer is fired and cured in the firing step.
Figure 15 is a partial cross-sectional view for explaining the internal stress of each layer of the metal-supported cell according to a first modification.
Figure 16A is a partial cross-sectional view for explaining the internal stress of each layer of the metal-supported cell according to a second modification.
Figure 16B is a partial cross-sectional view illustrating a state in which the metal-supported cell of the second modification is warped.
Figure 17A is a schematic cross-sectional view for explaining the metal-supported cell manufacturing method according to a third modification.
Figure 17B is a cross-sectional view illustrating internal stress of the metal-supported cell manufactured by means of the manufacturing method according to the third modification.
Figure 18 is a schematic cross-sectional view for explaining the metal-supported cell manufacturing method according to a fourth modification.
Figure 19 is a schematic cross-sectional view for explaining the metal-supported cell manufacturing method according to a sixth modification.
Figure 20 is a schematic cross-sectional view for explaining the metal-supported cell manufacturing method according to a seventh modification.

### Embodiments for Implementing the Invention

Embodiments of the present invention will be explained below with reference to the appended drawings. The description below does not limit the technical scope, nor the meanings of the terms described in the Claims. Dimensional ratios in the drawings are exaggerated for the sake of convenience of explanation and may differ from actual ratios. For example, the thickness of each layer and the dimensional proportion and shape of the constituent particles (ceramic particles and metal particles) shown in the drawings may differ from the actual thicknesses, proportions, and shapes, unless specified otherwise.

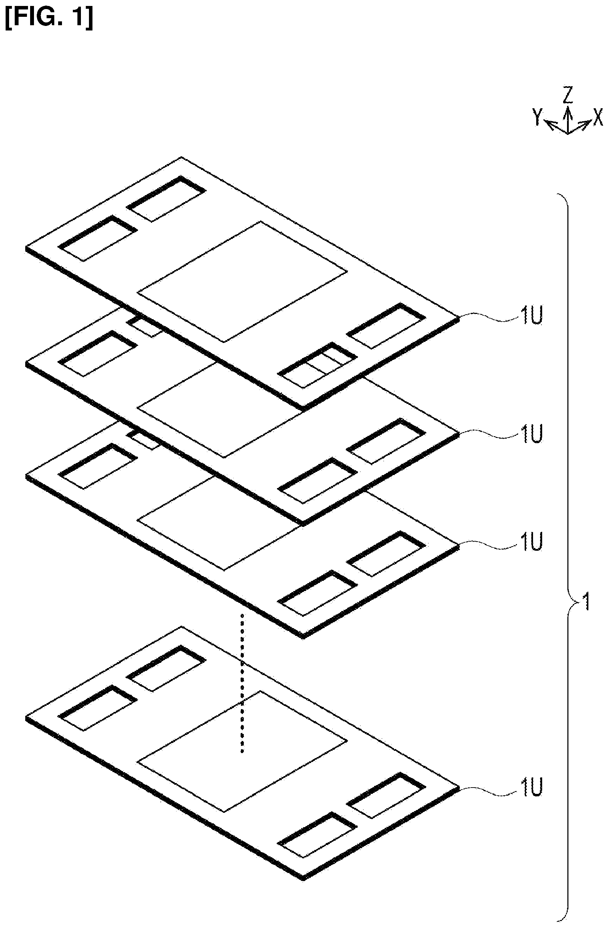

A metal-supported cell (MSC) 10 according to an embodiment of the present invention will be described with reference to Figures 1 to 6. The metal-supported cell 10 according to the present embodiment is used for a solid oxide fuel cell (SOFC).

For the sake of convenience of the description below, an XYZ orthogonal coordinate system is shown is the drawings. The x-axis and the y-axis lie in a horizontal plane, and the z-axis is perpendicular thereto.

Figure 1 is an exploded perspective view illustrating a fuel cell stack 1 according to a first embodiment, configured by stacking a plurality of the cell units 1U in the vertical direction. The vertical direction of the fuel cell stack 1 represented by the z-axis in the drawings is also referred to as the "stacking direction." In addition, the planar direction of each layer constituting the cell units 1U corresponds to the direction of the XY-plane.

### (Cell Unit 1U)

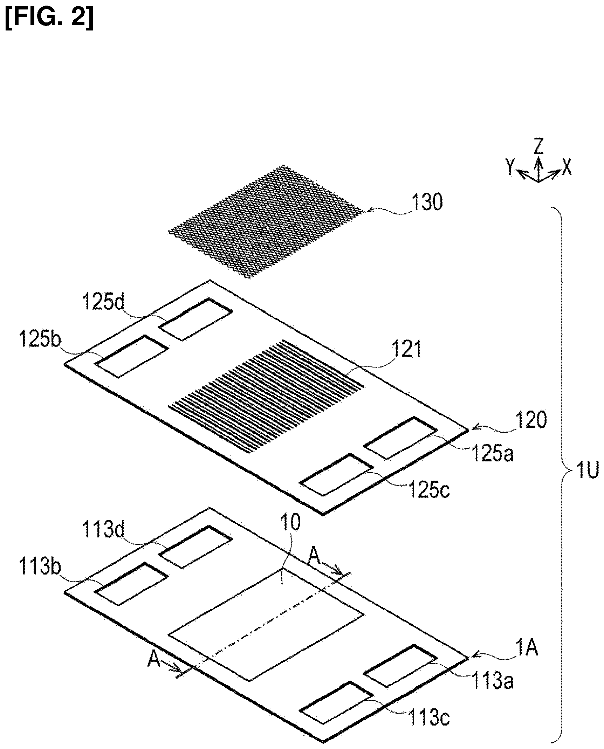

Figure 2 is an exploded perspective view of the cell unit 1U. As shown in Figure 2, the cell unit 1U is configured by stacking a metal-supported cell assembly 1 A, a separator 120 provided with flow passage portions 121 that define flow passages for gas, and an auxiliary collector layer 130. A contact material may be disposed between the metal-supported cell assembly 1A and the auxiliary collector layer 130 so as to bring the two into conductive contact, or the auxiliary collector layer 130 may be omitted.

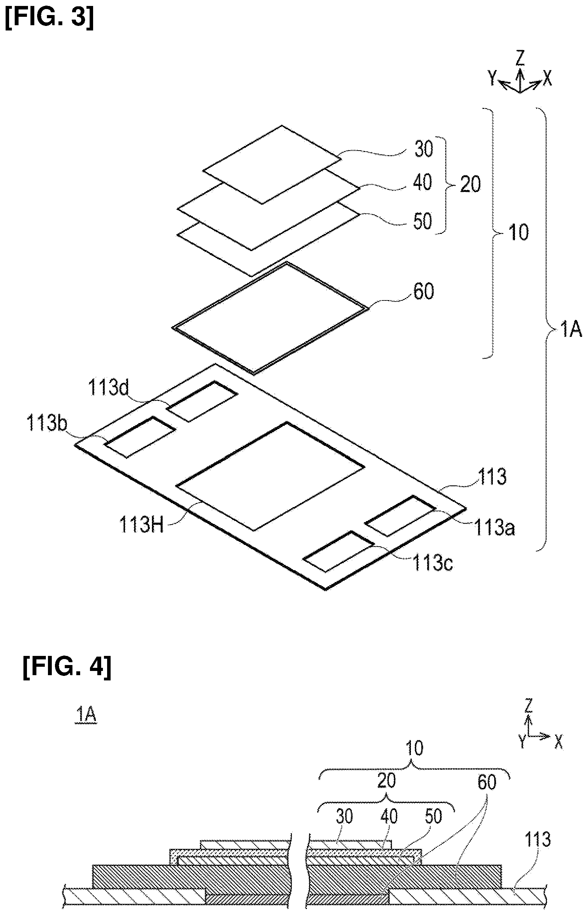

Figure 3 is an exploded perspective view of the metal-supported cell assembly 1A, and Figure 4 is a partial cross-sectional view of the metal-supported cell assembly 1A. As shown in Figures 3 and 4, the metal-supported cell assembly 1A has a metal-supported cell 10 and a cell frame 113 that holds the outer circumference of the metal-supported cell 10.

### (Metal-Supported Cell 10)

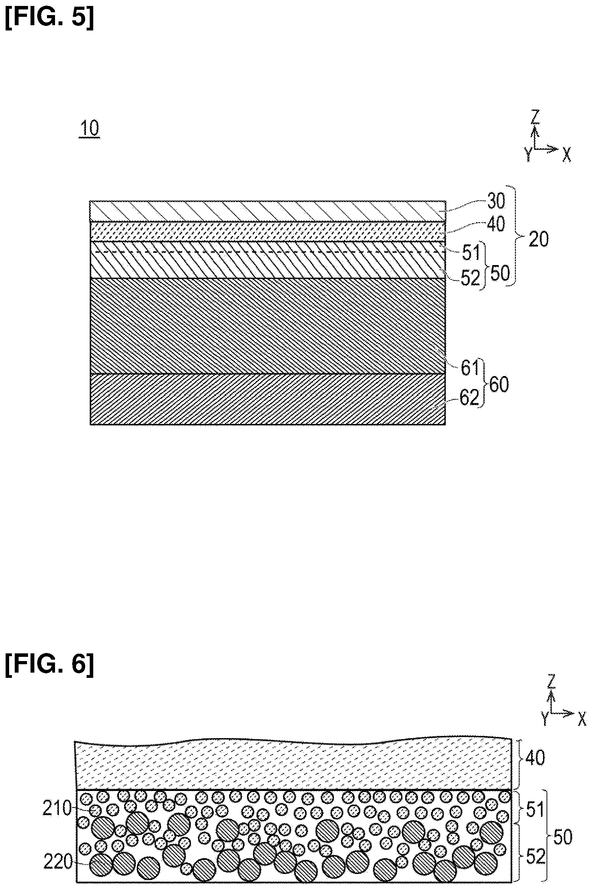

Figure 5 is an enlarged partial cross-sectional view illustrating metal-supported cell 10 shown in Figure 4. As shown in Figures 3-5, the metal-supported cell 10 is configured by stacking a plurality of layers including an electrolyte layer 40, electrode layers 30, 50, and a metal support layer 60. The electrode layers 30, 50 include a cathode layer 30 and an anode layer 50. The cathode layer 30 and the anode layer 50 may be collectively referred to below as the electrode layers 30, 50.

As shown in Figure 5, the metal-supported cell 10 is configured by sequentially stacking the cathode layer 30, the electrolyte layer 40, the anode layer 50, and the metal support layer 60. The electrode layers 30, 50 and the electrolyte layer 40 constitute an electrolyte electrode assembly 20. The metal support layer 60 supports the electrolyte electrode assembly 20. The metal-supported cell 10 has better mechanical strength and more rapid activation ability than electrolyte-supported cells and electrode-supported cells, and thus can be suitably used for SOFC.

### (Electrolyte Electrode Assembly 20)

As shown in Figures 3-5, the electrolyte electrode assembly 20 is configured by stacking the cathode layer 30 on one surface of the electrolyte layer 40 and the anode layer 50 on the other surface.

### (Cathode Layer 30)

The cathode layer 30 is an oxidant electrode and reacts a cathode gas (for example, the oxygen contained in air) with electrons to convert oxygen molecules into oxide ions. The cathode layer 30 is resistant to oxidizing atmosphere and has high gas permeability for allowing cathode gas to pass therethrough and high electrical (electron and ion) conductivity. In addition, the cathode layer 30 has a catalytic function of converting oxygen molecules into oxygen ions.

An example of a material forming the cathode layer 30 is an oxide of, for example, lanthanum, strontium, manganese, or cobalt.

### (Electrolyte Layer 40)

The electrolyte layer 40 has a function of separating anode gas and cathode gas. The electrolyte layer 40 allows oxide ions to pass from the cathode layer 30 toward the anode layer 50 but does not allow gas and electrons to pass. If the oxygen ions are power generation conductors, the electrolyte layer 40 is preferably formed from a material with high oxygen ion conductivity.

The electrolyte layer 40 is made from a ceramic. Examples of ceramics for forming the electrolyte layer 40 include stabilized zirconia doped with a rare earth oxide (for example, one, two, or more selected from Y2O3, SC₂O₃, Gd₂O₃, Sm₂O₃, Yb₂O₃, Nd₂O₃, etc.), ceria-based solid solution, and solid oxide ceramics such as perovskite type oxides (for example, SrCeO₃, BaCeO₃, CaZrO₃, SrZrO₃, etc.). In the present Specification, "ceramic" broadly refers to an inorganic sintered body, and, without being limited to non-metal oxides, includes metal oxides.

### (Anode Layer 50)

The anode layer 50 is a fuel electrode, and causes an anode gas (for example, hydrogen) to react with oxide ions, thereby generating an oxide of the anode gas and extract electrons. The anode layer 50 is resistant to a reducing atmosphere and has high gas permeability for allowing anode gas to pass therethrough and high electrical (electron and ion) conductivity. In addition, the anode layer 50 has a catalytic function of reacting anode gas with oxide ions.

Figure 6 is an enlarged partial cross-sectional view illustrating the electrolyte layer and the anode layer of the metal-supported cell shown in Figure 5. As shown in Figure 6, the anode layer 50 includes ceramic particles 210 and metal particles 220. The anode layer 50 according to the present embodiment includes a first anode layer 51 disposed adjacent the electrolyte layer 40 and a second anode layer 52 disposed adjacent to the metal support layer 60.

The first anode layer 51 is mainly formed from the ceramic particles 210. The second anode layer 52 is formed by a cermet including the ceramic particles 210 and the metal particles 220. As a result, the content ratio of the metal particles 220 to the ceramic particles 210 in the anode layer 50 is formed to be greater on the metal support layer 60 side than the electrolyte layer 40 side.

As described above, the ceramic content is higher in the first anode layer 51 disposed on the electrolyte layer 40 side. It is thereby possible to increase the ion conductivity at the interface between the anode layer 50 and the electrolyte layer 40 in order to improve the power generation performance.

The anode layer 50 is a porous body in which a plurality of pores are formed. The pores in the anode layer 50 are impregnated with catalyst. Examples of the catalyst of the anode layer 50 include metal catalysts such as nickel (Ni).

The same material as the ceramic forming the electrolyte layer 40 may be used as the material constituting the ceramic particles 210.

The same material as the metal forming the metal support layer 60 may be used as the material constituting the metal particles 220. In the present Specification, "metal particles 220" mean the main component of the anode layer 50 and does not include a metal catalyst. In other words, the metal particles 220 are including a metal material without a catalytic function or a metal material whose main function is not catalytic. In addition, "metal forming the metal particles 220" and "metal forming the metal support layer 60" do not include ceramics such as metal oxides.

### (Metal Support Layer 60)

As shown in Figures 3 and 4, the metal support layer 60 supports the electrolyte electrode assembly 20 from the anode layer 50 side. It is possible to improve the mechanical strength of the electrolyte electrode assembly 20 by supporting the electrolyte electrode assembly 20 with the metal support layer 60. The metal support layer 60 is formed from a porous metal having gas permeability and electron conductivity.

As shown in Figure 5, the metal support layer 60 according to the present embodiment includes a first metal support layer 61 disposed adjacent to the anode layer 50 and a second metal support layer 62 disposed adjacent to the first metal support layer 61. The second metal support layer 62 is positioned on the surface layer (outermost layer) of the metal-supported cell 10.

Examples of the metal forming the metal support layer 60 include stainless steel (SUS) containing nickel (Ni) or chromium (Cr).

### (Cell Frame 113)

As shown in Figures 3 and 4, the cell frame 113 holds the metal-supported cell 10 from the outer edges. As shown in Figure 3, the cell frame 113 has an opening 113H. The metal-supported cell 10 is disposed in the opening 113H of the cell frame 113. The outer perimeter of the metal-supported cell 10 is joined to the inner edge of the opening 113H of the cell frame 113.

As shown in Figure 3, the cell frame 113 has an anode gas inlet 113a and an anode gas outlet 113b through which the anode gas flows, and a cathode gas inlet 113c and a cathode gas outlet 113d through which the cathode gas flows.

### (Separator 120)

As shown in Figure 2, the flow passage portions 121 of the separator 120 are formed in an essentially linear shape such that the convex/concave shapes extend in one direction (Y direction). As a result, the direction of the flow of the gas that flows along the flow passage portions 121 is the Y direction.

As shown in Figure 2, the separator 120 has an anode gas inlet 125a and an anode gas outlet 125b through which the anode gas flows, and a cathode gas inlet 125c and a cathode gas outlet 125d through which the cathode gas flows.

### (Auxiliary Collector Layer 130)

The auxiliary collector layer 130 forms a space through which the gas passes, equalizes the surface pressure, and assists the electrical contact between the metal-supported cell 10 and the separator 120. The auxiliary collector layer 130 can be formed from a wire mesh expanded metal, for example.

### [Internal Stress of Each Layer Of Metal-Supported Cell 10]

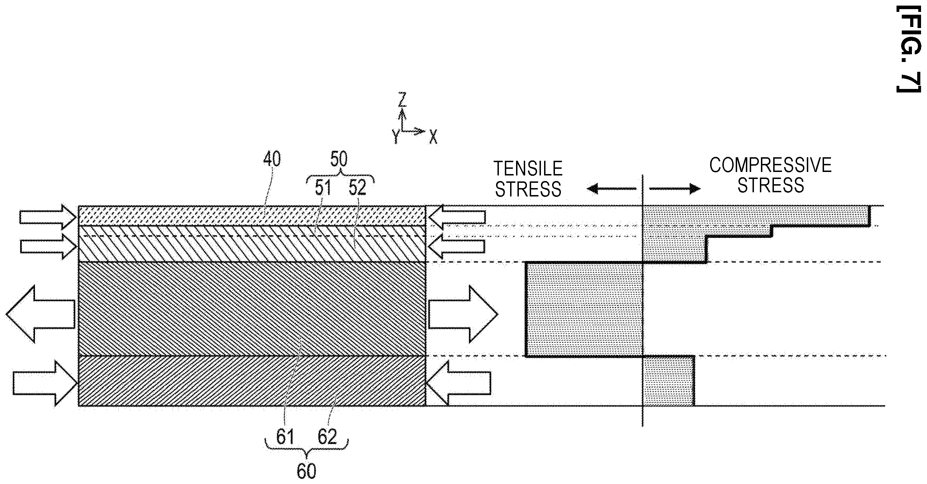

Figure 7 is a partial cross-sectional view and a stress distribution for explaining the internal stress of each layer of the metal-supported cell 10. The metal-supported cell 10 is formed such that each layer has internal stress by means of the manufacturing method described further below.

The electrolyte layer 40 has compressive residual stress along the direction of the XY-plane. Of the plurality of layers constituting the metal-supported cell 10, at least one layer other than the electrolyte layer 40 has tensile residual stress along the direction of the XY-plane. In the present Specification, "internal stress" includes compressive residual stress and tensile residual stress and refers to stress being generated or retained by the material itself inside each layer, regardless of an external force. be. child

As shown in Figure 7, in the present embodiment, the electrolyte layer 40, the anode layer 50, and the second metal support layer 62 have compressive residual stress along the direction of the XY-plane. The first metal support layer 61 has tensile residual stress along the direction of the XY-plane.

In the metal-supported cell 10 according to the present embodiment, the surface layer of the metal-supported cell 10 (electrolyte layer 40 and second metal support layer 62) retain compressive residual stress. As a result, the metal-supported cell 10 is strengthened using the same mechanism used in tempered glass, in which the strength is improved by causing the surface layer to retain compressive residual stress.

In addition, the stress distribution of the metal-supported cell 10 displays a symmetrical stress distribution in which the surface-side layers (electrolyte layer 40, anode layer 50, and second metal support layer 62) have compressive residual stress, and the central layer (first metal support layer 61) has tensile residual stress. As a result, the internal stress of the metal-supported cell 10 is canceled out. Therefore, it is possible suppress the warping of the metal-supported cell 10. Thus, greater compressive residual stress can be applied to the electrolyte layer 40.

Furthermore, the surface layer of the metal-supported cell 10 comes in contact with the auxiliary collector layer 130 and the separator 120 to receive external inputs. The strength of the surface layer of the metal-supported cell 10 is improved by the compressive residual stress, and deformation and damage caused by external inputs can be suppressed.

Brittle ceramic materials forming the electrolyte layer 40 and the anode layer 50 are characterized by being weak against tensile stress and resistant compressive stress. As described above, the electrolyte layer 40 and the anode layer 50 (ceramic layer) are formed so as to have compressive residual stress, so that it is possible to suppress the formation of cracks in the ceramic layer (particularly, the electrolyte layer 40).

However, the metal support layer 60 has ductility and is thus resistant to tensile stress. It is possible to further increase the strength of the metal-supported cell 10 by employing a structure in which the first metal support layer 61, which is resistant to tensile stress, bears the reaction force against the compressive residual stress.

### [Linear Expansion Coefficient of Each Layer of Metal-Supported Cell 10]

In a temperature range from room temperature (about 15°C to 30°C) to firing temperature (about 1000°C to 1400°C), the linear expansion coefficient (CTE) is generally larger in the metal support layer 60 made of a metal material that in the anode layer 50 and the electrolyte layer 40, which contain ceramic material. In addition, in the present embodiment, the anode layer 50 is formed from a material in which the ceramic particles 210 and the metal particles 220 are mixed, so that the linear expansion coefficient becomes greater on the anode layer 50 side than the electrolyte layer 40 side. Accordingly, the relationship between the linear expansion coefficients of the plurality of layers of the metal-supported cell 10 can be expressed as the linear expansion coefficient of the electrolyte layer 40 < linear expansion coefficient of the anode layer 50 < linear expansion coefficient of the metal support layer 60.

### [Method for Manufacturing Metal-Supported Cell 10]

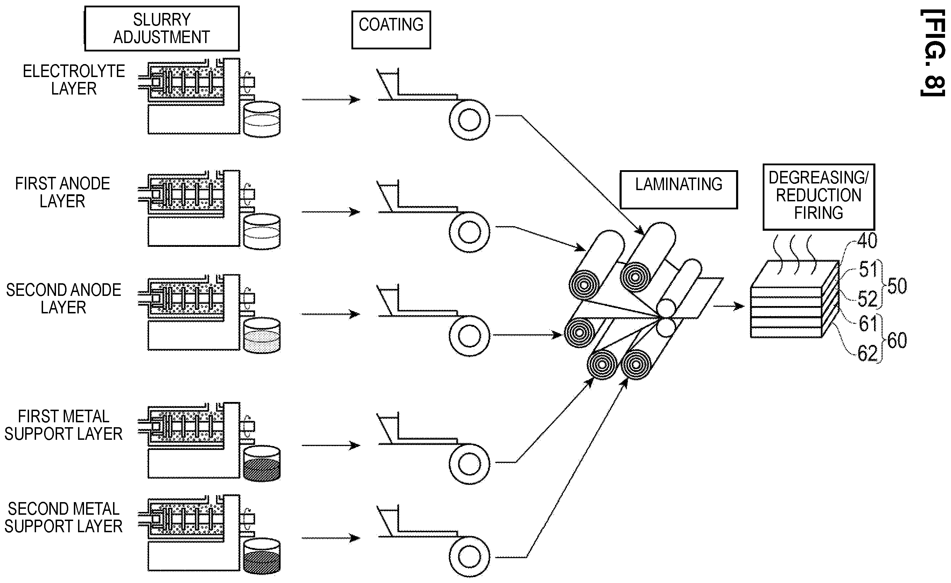

The method for manufacturing the metal-supported cell 10 will be described next with reference to Figures 8-14.

In the following description, the method for manufacturing a half cell including the metal support layer 60, the anode layer 50, and the electrolyte layer 40, which is the precursor of the metal-supported cell 10, will be described, and the method for manufacturing the cathode layer 30 will be omitted.

Figure 8 is a schematic view for explaining the method for manufacturing the metal-supported cell 10. As shown in Figure 8, the method for manufacturing the metal-supported cell 10 has a slurry preparation step, a coating step, a laminating step, and a firing step. The method for manufacturing the metal-supported cell 10 further has a cooling step for cooling subsequent to the firing step.

In the present embodiment, both the timing for firing and curing of each layer in the firing step and the cooling shrinkage rate of each layer in the cooling step caused by linear expansion coefficient (CTE) are adjusted in order to control the internal stress of the metal-supported cell 10. It becomes possible to adjust the internal stress of the manufactured metal-supported cell 10 more reliably by controlling both the timing of firing and curing, and the linear expansion coefficient (CTE).

### (Slurry Preparation Step)

First, in the slurry preparation step, slurry raw materials are mixed to prepare an electrolyte slurry, a first anode slurry, a second anode slurry, a first metal support slurry, and a second metal support slurry. A known stirring device can be appropriately selected and used to mix the slurry raw materials.

The electrolyte slurry is mainly including ceramic and is formed by mixing slurry raw materials containing a solvent, a sintering aid, and a binder.

The first anode slurry is formed by mixing slurry raw materials, mainly including ceramic (ceramic particles 210) and also containing a solvent, a sintering aid, and a binder. The second anode slurry is formed by mixing slurry raw materials, mainly including ceramic (ceramic particles 210) and metal (metal particles 220) and also containing a solvent, a sintering aid, and a binder.

The first metal support slurry and the second metal support slurry are formed by mixing slurry raw materials, mainly including metal, and also containing a solvent, a sintering aid, and a binder.

According to the manufacturing method of the present invention, the amount of the sintering aid is adjusted in order to control the timing of firing and curing of each layer in the subsequent firing step. Specifically, the amount of the sintering aid is adjusted so that the electrolyte slurry > first anode slurry > second anode slurry > first metal support slurry, and second metal support slurry > first metal support slurry. As a result, it is possible to cause curing and contraction in the firing step in the following order: electrolyte slurry → first anode slurry → second anode slurry → first metal support slurry, and second metal support slurry → first metal support slurry. The firing step will be described in detail below.

Examples of the solvent for the slurry include, but are not limited to, water and/or alcohol solvents such as methanol, ethanol, 1-propanol (NPA), 2-propanol, ethylene glycol, and propylene glycol, and organic solvents such as N methyl-2 pyrrolidone (NMP). These may be used individually, or two or more types may be mixed and used. The amount of solvent to be used is preferably adjusted such that the viscosity is suitable for molding when the slurry is molded into a sheet.

A known organic binder can be appropriately selected and used as the binder to be added to the slurry. Examples of the organic binder include ethylene-based copolymers, styrene-based copolymers, acrylate-based copolymers, methacrylate-based copolymers, vinyl butyral-based resins, vinyl acetal-based resins, vinyl formal-based resins, vinyl alcohol-based resins, and celluloses such as ethyl cellulose.

A plasticizer, a dispersant, and the like may be added to each slurry as deemed necessary.

### (Coating Step)

In the subsequent coating step, a sheet forming method, such as the tape casting method, using a coating device such as a knife coater or a doctor blade, is used to form each slurry prepared in the slurry preparation step into a sheet. The obtained sheet-like slurries are dried and, if necessary, subjected to heat treatment, in order to obtain an electrolyte sheet, first anode electrode sheet, a second anode electrode sheet, a first metal support sheet, and a second metal support sheet. The electrolyte sheet, the first anode electrode sheet, the second anode electrode sheet, the first metal support sheet, and the second metal support sheet are commonly referred to as green sheets.

### (Laminating Step)

In the subsequent lamination step, the electrolyte sheet, the first anode electrode sheet, the second anode electrode sheet, the first metal support sheet, and the second metal support sheet are sequentially stacked and laminated to form a laminated body.

### (Firing Step)

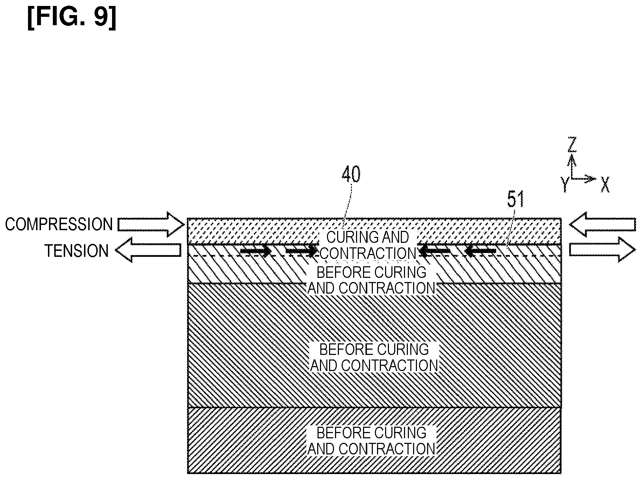

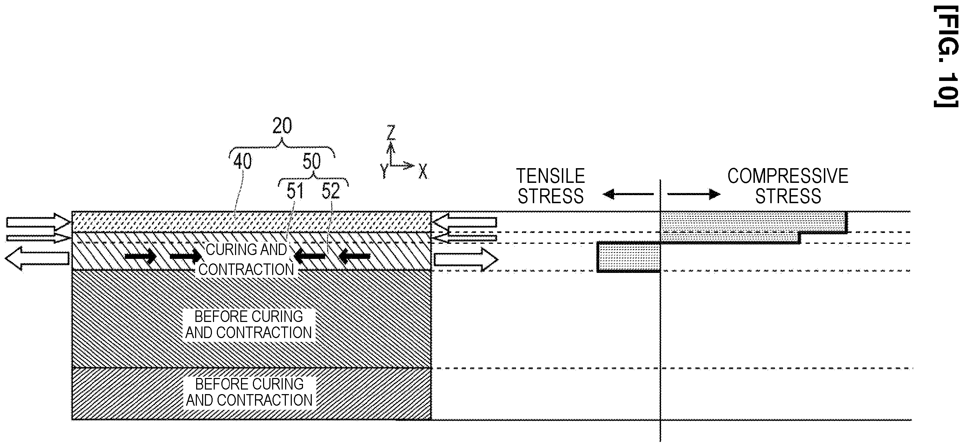

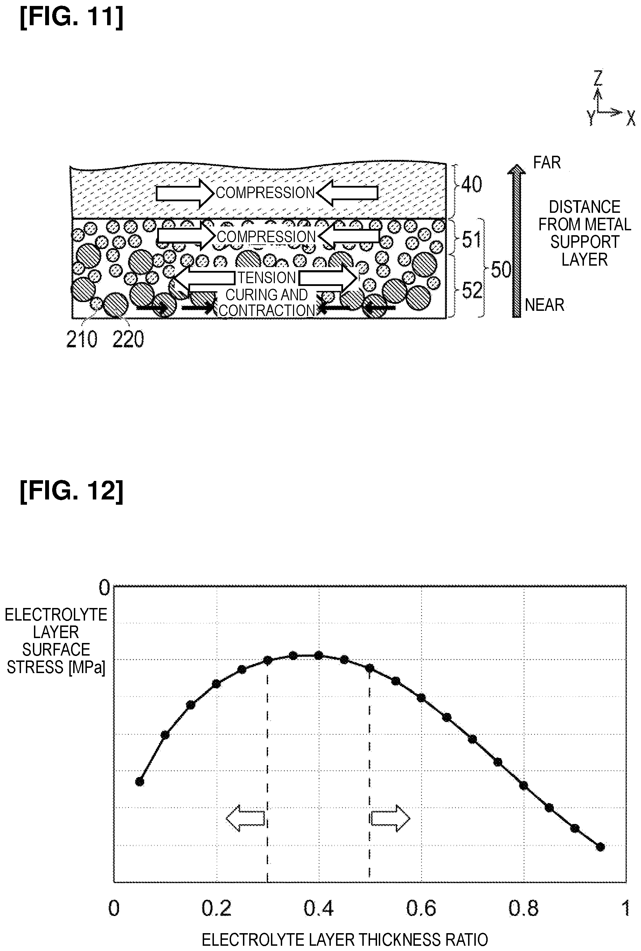

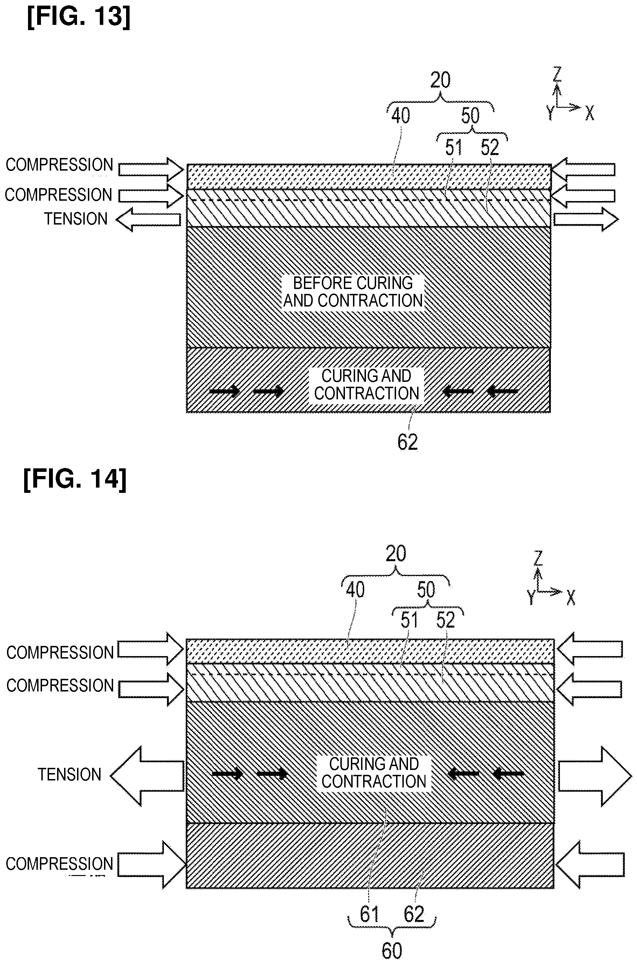

Next, the firing step will be described with reference to Figures 9-14. Figure 9 is a cross-sectional view illustrating the internal stress when the first anode layer 51 is fired and cured in the firing step. Figure 10 is a cross-sectional view illustrating the internal stress when the second anode layer 52 is fired and cured in the firing step. Figure 11 is an enlarged partial cross-sectional view illustrating the electrolyte layer 40 and the anode layer 50 shown in Figure 10. Figure 12 is a graph illustrating the relationship between the thickness ratio of the electrolyte layer 40 and surface stress of the electrolyte layer 40 in the state shown in Figure 10. Figure 13 is a cross-sectional view illustrating the internal stress when the second metal support layer 62 is fired and cured in the firing step. Figure 14 is a cross-sectional view illustrating the internal stress when the first metal support layer 61 is fired and cured in the firing step.

In the firing step, the timing of firing and curing for each layer are controlled in order to control the internal stress of the metal-supported cell 10. Specifically, at least one of the electrolyte layer 40, the anode layer 50 (electrode layer), and the metal support layer 60 is fired and subjected to curing and contraction, in order to apply compressive residual stress to the layer adjacent to the fired layer. Furthermore, tensile residual stress is applied to the fired layer as reaction force against the compressive residual stress.

If the timings of firing and curing of each layer are the same, each layer contracts at the same time during firing. At this time, it is also conceivable to provide a difference between the firing contraction rate of each layer in order to control the internal stress. However, the difference in the amount of contraction due to the difference in the firing contraction rate when each layer contracts at the same time becomes smaller than the difference in the amount of contraction when only one of the adjacent layers contracts. Accordingly, it is possible to apply a larger compressive residual stress by controlling the timing of firing and curing, compared with controlling the firing contraction rate.

In the firing step, the laminated body described above is degreased and then co-fired. The firing temperature can be set to 1000°C to 1400°C, for example. As described above, the electrolyte slurry → first anode slurry → second anode slurry → first metal support slurry, and second metal support slurry → first metal support slurry are caused to cure and contract (bake) in that order. In the present embodiment, the amount of the sintering aid is adjusted such that firing and curing occur in the following order: electrolyte slurry → first anode slurry → second anode slurry → second metal support slurry → first metal support slurry.

First, the electrolyte slurry is fired and cured to form the electrolyte layer 40. Then, as shown in Figure 9, the first anode slurry is fired and cured to form the first anode layer 51. At this time the first anode layer 51 cures and contracts, thereby applying compressive residual stress to the adjacent electrolyte layer 40. Tensile residual stress is applied to the first anode layer 51 as a reaction force to the compressive residual stress of the electrolyte layer 40.

Then, as shown in Figure 10, the second anode slurry is fired and cured to form the second anode layer 52. The second anode layer 52 is cured and contracted, thereby applying compressive residual stress to the first anode layer 51. Furthermore, compressive residual stress is also applied to the electrolyte layer 40 via the first anode layer 51.

With reference to Figure 11, in the ceramic layers (electrolyte layer 40 and anode layer 50), firing is carried out sequentially from the far side to the near side of the metal support layer 60 in the stacking direction; as a result, it is possible to apply a larger compressive residual stress to the electrolyte layer 40.

Even when a first anode layer 51 exists without a metal skeleton in the anode layer 50 for enhancing power generation performance, as in the present embodiment, the internal stress of the fragile first anode layer 51 composed mainly of ceramic can be placed in a compressed state by means of a second anode layer 52, which possesses a metal skeleton (metal particles 220) having a higher fracture toughness and rigidity, and which later cures and contracts. In addition, the reaction force to the compressive residual stress of the first anode layer 51 can be supported by the second anode layer 52, which has a metal skeleton that is resistant to tensile stress.

Here, the relationship between the thickness ratio of the electrolyte layer 40 and surface stress of the electrolyte layer 40 will be evaluated with reference to Figure 12. At a firing temperature of 1200°C, it is assumed that the Young's modulus of the electrolyte layer 40 is 150 GPa, that the Young's modulus of the anode layer 50 is 55 GPa, and that the substantial distortion difference between the electrolyte layer 40 and the anode layer 50 due to firing contraction is 0.5%. As shown in Figure 10, in a state in which the electrolyte layer 40 to the anode layer 50 have been fired and cured, the relationship between the thickness ratio of the electrolyte layer 40 and surface stress of the electrolyte layer 40 (the compressive residual stress on the surface) is shown in Figure 12. Here, the thickness ratio of the electrolyte layer 40 is the ratio of the thickness of the electrolyte layer 40 to the total thickness of the electrolyte layer 40 and the anode layer 50. In the graph shown in Figure 12, the compressive residual stress at the surface of the electrolyte layer 40 is shown as a negative value. Since the magnitude of the compressive residual stress is an absolute value, the compressive residual stress is higher toward the negative side of the vertical axis.

From the result shown in Figure 12, it can be understood that the compressive residual stress at the surface of the electrolyte layer 40 can be further increased when the thickness ratio of the electrolyte layer 40 is less than or equal to 0.3 or greater than or equal to 0.5. From the standpoint of reducing electrical resistance and improving power generation performance, the thickness ratio of the electrolyte layer 40 is preferably 0.3 or less. From the standpoint of increasing the compressive residual stress at the surface of the electrolyte layer 40, the thickness ratio of the electrolyte layer 40 is preferably 0.5 or more.

The second metal support slurry is then fired and cured to form the second metal support layer 62, as shown in Figure 13.

Thereafter, as shown in Figure 14, the first metal support slurry is fired and cured to form the first metal support layer 61. The first metal support layer 61, which has the highest fracture toughness and rigidity in the metal-supported cell 10, cures and contracts last, in order to apply the compressive residual stress to the adjacent second anode layer 52 and second metal support layer 62. As a result, the tensile residual stress of the second anode layer 52 is changed to compressive residual stress. Furthermore, compressive residual stress is also applied to the electrolyte layer 40 via the first anode layer 51. Tensile residual stress is applied to the first metal support layer 61 as the reaction force to the compressive residual stress of the second anode layer 52 and the second metal support layer 62.

As described above, in the metal support layer 60, firing is carried out sequentially from the far side to the near side of the ceramic layers (electrolyte layer 40 and anode layer 50), in the stacking direction. As a result, since a part of the metal support layer 60 on the surface layer side, which is likely to receive inputs from outside, has compressive residual stress, it is possible to improve the strength against external inputs.

As shown in Figure 14, by means of the firing step described above, it becomes possible to achieve a state of stress in which all of the layers containing ceramic in the metal-supported cell 10 (electrolyte layer 40 and anode layer 50) have compressive residual stress, while only the first metal support layer 61 has tensile residual stress. As a result, the internal stress of the metal-supported cell 10 is canceled out, and the structure becomes more stable.

Then, the metal support layer 60 is divided in two, and the curing and contraction of the first metal support layer 61 are carried out last, thereby making it possible to apply compressive residual stress to the second metal support layer 62, which is the surface layer of the metal-supported cell 10. As a result, a symmetrical stress distribution is achieved, in which the upper and lower surface layers of the metal-supported cell 10 have compressive residual stress and only the central layer has tensile residual stress. As a result, the bending moments cancel out inside the metal-supported cell 10, so that it is possible to suppress the warping of the metal-supported cell 10, and to apply a larger compressive residual stress to the electrolyte layer 40.

### (Cooling Step)

Finally, in the cooling step, the metal-supported cell 10 is cooled. Cooling is achieved by means of natural cooling by standing at room temperature (15°C-30°C). Natural cooling can be carried out in a reducing atmosphere in order to prevent oxidation, or in air.

As described above, in the temperature region of room temperature to the firing temperature, the relationship between the linear expansion coefficients of the plurality of layers becomes is the linear expansion coefficient of the electrolyte layer 40 < linear expansion coefficient of the anode layer 50 < linear expansion coefficient of the metal support layer 60. For this reason, the relationship between the contraction rates in the cooling step is the contraction rate of electrolyte layer 40 < contraction rate of anode layer 50 < contraction rate of metal support layer 60. As a result, it is possible to apply compressive residual stress to the electrolyte layer 40, which has a relatively small linear expansion coefficient, in the areas of actual use, from room temperature to the operating temperature (about 600-800°C).

The action and effect of the present embodiment will be described next.

The metal-supported cell 10 according to the present embodiment is a metal-supported cell, in which a plurality of layers including the electrolyte layer 40, the electrode layers 30, 50, and the metal support layer 60 are stacked. The electrolyte layer 40 has compressive residual stress along the direction of the XY-plane, and, of the plurality of layers, at least one layer other than the electrolyte layer 40 has tensile residual stress along the direction of the XY-plane.

In addition, the method for manufacturing the metal-supported cell 10 according to the present invention comprises stacking a plurality of layers including the electrolyte layer 40, the electrode layers 30, 50, and the metal support layer 60, applying compressive residual stress to the electrolyte layer 40 along the planar direction, and applying tensile residual stress along the planar direction to at least one layer of the plurality of layers other than the electrolyte layer 40.

According to the metal-supported cell 10 and the method for manufacturing the metal-supported cell 10, since the electrolyte layer 40 has compressive residual stress along the planar direction, it is possible to prevent cracks in the electrolyte layer 40 caused by thermal stress in the areas of actual use. In addition, since a layer other than the electrolyte layer 40 bears the tensile residual stress as the reaction force to the compressive residual stress, the internal stress of the metal-supported cell 10 is canceled out, which makes the structure more stable and enhances the strength.

Furthermore, the anode layer 50 (electrode layer) and/or the metal support layer 60 has tensile residual stress along the planar direction. Since a layer other than the electrolyte layer 40, that is, the anode layer 50 (electrode layer) and/or the metal support layer 60 bears the tensile residual stress, the internal stress of the metal-supported cell 10 is canceled out, which makes the structure more stable and enhances the strength.

Furthermore, the anode layer 50 (electrode layer) and/or the metal support layer 60 has compressive residual stress along the planar direction. When the anode layer 50, which includes a ceramic, has compressive residual stress along the planar direction, it is possible to prevent cracks in the anode layer 50 caused by thermal stress. In addition, when the metal support layer 60 has compressive residual stress along the planar direction, a symmetrical stress distribution is achieved, wherein the surface layers of the metal-supported cell 10 (electrolyte layer 40 and metal support layer 60) have compressive residual stress and only the central layer (anode layer 50) has tensile residual stress, so that the internal stress of the metal-supported cell 10 is canceled out. As a result, it is possible suppress the warping of the metal-supported cell 10. As a result, it is possible apply greater compressive residual stress to the electrolyte layer 40.

Furthermore, the metal support layer 60 includes the first metal support layer 61 and the second metal support layer 62 (plurality of layers). Of the plurality of layers of the metal support layer 60, at least the second metal support layer 62, which is a surface layer, has compressive residual stress along the direction of the XY-plane. Of the plurality of layers of the metal support layer 60, the first metal support layer 61, which is not a surface layer, has tensile residual stress along the direction of the XY-plane.

According to the foregoing configuration, the metal support layer 60 is divided in two, and the curing and contraction of the first metal support layer 61 are carried out last, thereby making it possible to apply compressive residual stress to the second metal support layer 62, which is positioned on the surface layer. As a result, a symmetric stress distribution is achieved, wherein the upper and lower surface layers of the metal-supported cell 10 have compressive residual stress, and only the central layer has tensile residual stress. As a result, the bending moments cancel out inside the metal-supported cell 10, so that it is possible to suppress the warping of the metal-supported cell 10 and to apply a larger compressive residual stress to the electrolyte layer 40. Furthermore, since the second metal support layer 62, which is likely to receive inputs from outside, has compressive residual stress, it is also possible to improve the strength against external inputs.

In addition, the relationship between the linear expansion coefficients of the plurality of layers of the metal-supported cell 10 is the linear expansion coefficient of the electrolyte layer 40 < linear expansion coefficient of the anode layer 50 (electrode layer) < linear expansion coefficient of the metal support layer 60. For this reason, the relationship between the contraction rates in the cooling step is the contraction rate of electrolyte layer 40 < contraction rate of anode layer 50 < contraction rate of metal support layer 60. As a result, it is possible to apply compressive residual stress to the electrolyte layer 40, which has a relatively small linear expansion coefficient.

Furthermore, according to the method for manufacturing the metal-supported cell 10, the timing of firing and curing are controlled in order to control the internal stress of the metal-supported cell 10. At least one of the electrolyte layer 40, the anode layer 50 (electrode layer), and the metal support layer 60 is fired and subjected to curing and contraction, in order to apply compressive residual stress to the layer adjacent to the fired layer, and to apply tensile residual stress to the fired layer as the reaction force against the compressive residual stress It is possible to apply a larger compressive residual stress compared to when only the firing contraction rate is controlled, by controlling the timing of firing and curing of each layer.

Furthermore, when the timing of firing and curing are controlled, in the anode layer 50 (electrode layer) and the electrolyte layer 40, firing is carried out sequentially from the far side to the near side of the metal support layer 60 in the stacking direction. As a result, it is possible to apply a larger compressive residual stress to the electrolyte layer 40, which is farther from the metal support layer 60.

Furthermore, when the timing of firing and curing are controlled, the metal support layer 60 is fired after the anode layer 50 (electrode layer) and the electrolyte layer 40. As a result, it is possible to achieve a structure in which the metal support layer 60, which is resistant to tensile stress, bears the tensile residual stress as the reaction force to the compressive residual stress. For this reason, the internal stress of the metal-supported cell 10 is canceled out, the structure becomes more stable, and the strength can be further improved.

Furthermore, when the timing of firing and curing are controlled, in the metal support layer 60, firing is carried out sequentially from the far side to the near side of the electrolyte layer 40 in the stacking direction. As a result, since a part of the metal support layer 60 on the surface layer side, which is likely to receive inputs from outside, has compressive residual stress, it is possible to improve the strength against external inputs.

In addition, the anode layer 50 (electrode layer) includes a first anode layer 51 (first electrode layer), which contains a ceramic and a catalyst, and the second anode layer 52 (second electrode layer), which is disposed closer to the metal support layer 60 side than the first anode layer 51 and which contains a ceramic, a metal, and a catalyst. When the timing of firing and curing are controlled, the electrolyte layer 40, the first anode layer 51, the second anode layer 52, and the metal support layer 60 are fired in that order. As a result, the second anode layer 52 is fired, cured, and made to contract later, thereby making is possible to place the internal stress of the fragile first anode layer 51, composed mainly of ceramic, in a compressed state. In addition, the second anode layer 52, which has a metal skeleton that is resistant to tensile stress is able to support the reaction force to the compressive residual stress of the first anode layer 51.

Modifications of the present embodiment will be described next.

### [Modification of Metal-Supported Cell]

A modification of the metal-supported cell will be described below. The configuration of the metal-supported cell according to the present invention may be appropriately changed so long as at least the electrolyte layer has compressive residual stress along the planar direction, and at least one layer from among the plurality of layers except the electrolyte layer has tensile residual stress along the planar direction. In the following first modification and second modification, examples of a plurality of modes included in the present invention will be described, but the present invention is not limited to the above-described embodiments and modifications. The same reference symbols have been assigned to configurations that are the same as those in the embodiment described above, and the descriptions thereof have been omitted.

### <First Modification >

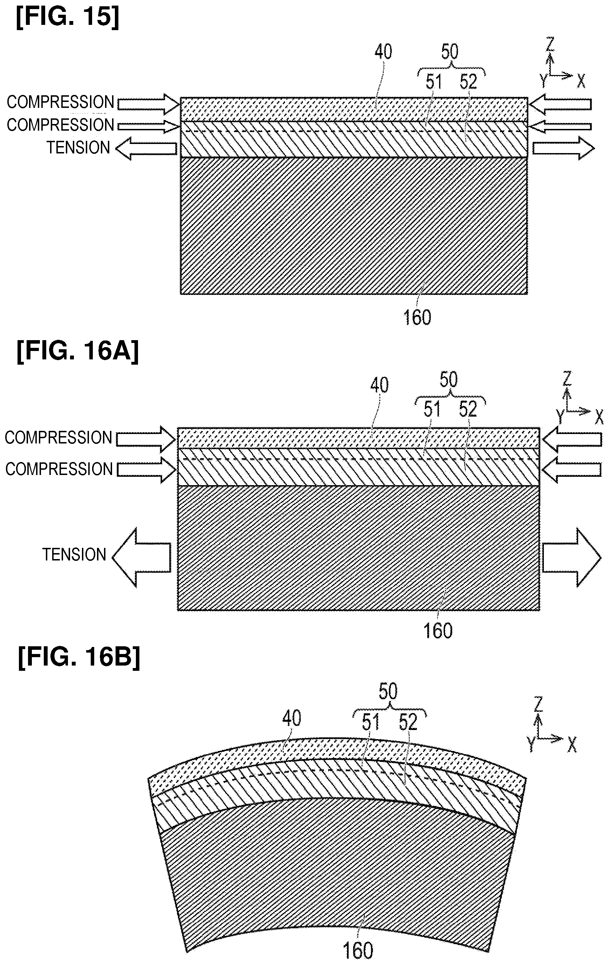

Figure 15 is a partial cross-sectional view for explaining the internal stress of each layer of the metal-supported cell according to the first modification. The metal-supported cell according to the first modification differs from the embodiment described above in that the metal support layer 160 includes a single layer and does not have internal stress.

The electrolyte layer 40 and the first anode layer 51 have compressive residual stress along the direction of the XY-plane. The second anode layer 52 has tensile residual stress along the direction of the XY-plane as reaction force to the compressive residual stress. Since the fragile electrolyte layer 40 and the first anode layer 51 composed mainly of a ceramic have compressive residual stress, it is possible to prevent cracks caused by thermal stress in areas of actual use. Furthermore, since the second anode layer 52, which has a metal skeleton resistant to tensile stress, bears the tensile residual stress, the internal stress of the metal-supported cell is canceled out, which makes the structure more stable and enhances the strength.

### <Second Modification >

Figure 16A is a partial cross-sectional view for explaining the internal stress of each layer of the metal-supported cell according to a second modification. The metal-supported cell according to the second modification differs from the embodiment described above in that the metal support layer 160 includes a single layer and has tensile residual stress.

Since the metal support layer 160, which is mainly including metal material and which has the greatest resistance to tensile stress from among the plurality of layers of the metal-supported cell, bears the tensile residual stress, the internal stress of the metal-supported cell is canceled out, which makes the structure more stable and enhances the strength.

However, in the metal-supported cell according to the second modification, the internal stress distribution is asymmetric, so that warping could occur. Figure 16B is a partial cross-sectional view illustrating a state in which the metal-supported cell of the second modification is warped. The electrolyte layer 40, which has compressive residual stress in the direction of the XY-plane, deforms in a direction that extends in the direction of the XY-plane, and the metal support layer 160, which has tensile residual stress in the direction of the XY-plane, deforms in a direction that contracts in the direction of the XY-plane. As a result, it may warp in the state shown in Figure 16B. Accordingly, from the standpoint of suppressing warpage, the internal stress distribution of the metal-supported cell is preferably symmetrical, as in the above-described embodiment.

### [Modification of the Metal-Supported Cell Manufacturing Method]

A modification of the metal-supported cell manufacturing method will be described next. The metal-supported cell manufacturing method according to the present invention may be appropriately changed so long as compressive residual stress along the planar direction is applied to the electrolyte layer, and, from among the plurality of layers, tensile residual stress along the planar direction is applied to at least one layer other than the electrolyte layer. In the following third modification and fourth modification, one example of the configurations included in the present invention will be described, but the present invention is not limited to the above-described embodiments and modifications. The same reference symbols have been assigned to configurations that are the same as those in the embodiment described above, and the descriptions thereof have been omitted.

### <Third Modification>

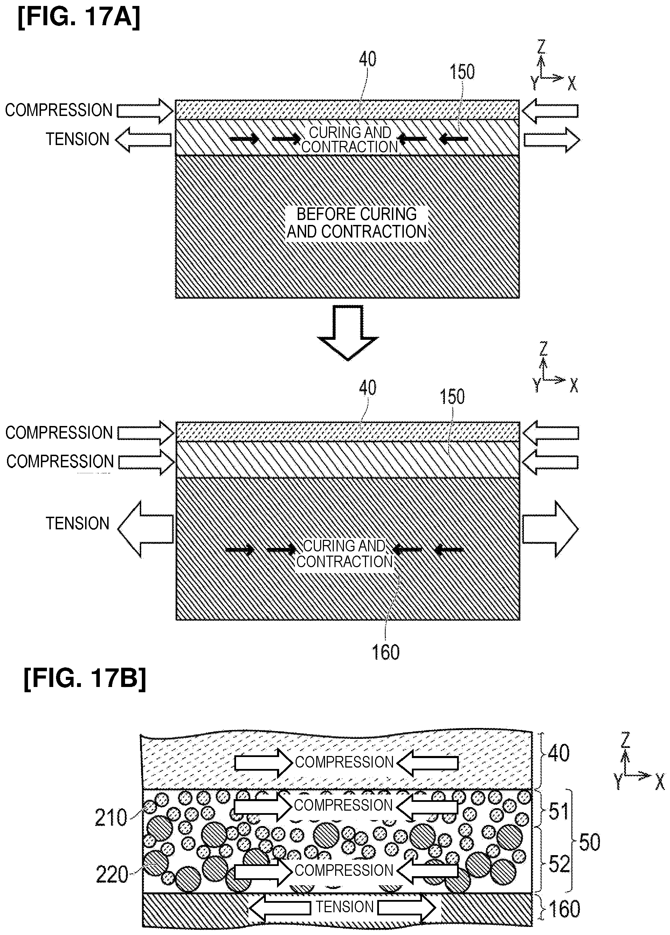

Figure 17A is a schematic cross-sectional view for explaining the metal-supported cell manufacturing method according to a third modification. Figure 17B is a cross-sectional view illustrating the internal stress of the metal-supported cell manufactured by means of the manufacturing method according to the third modification. The metal-supported cell manufacturing method according to the third modification differs from the embodiment described above in the manufacture of the metal-supported cell according to the second modification.

As shown in Figure 17A, in the firing step, the electrolyte layer 40 and an anode layer 150 are sequentially fired and cured, after which the metal support layer 160 is fired and cured. As a result, compressive residual stress is applied to the ceramic layers (electrolyte layer 40 and anode layer 150), and tensile residual stress is applied to the metal support layer 160 as a reaction force thereto.

As shown in Figure 17B, since the electrolyte layer 40 has compressive residual stress along the planar direction, it is possible to prevent cracks in the electrolyte layer 40 caused by thermal stress in the areas of actual use. Furthermore, since the metal support layer 160 resistant to tensile strength bears the tensile residual stress as the reaction force to the compressive residual stress, the internal stress of the metal-supported cell is canceled out, which makes the structure more stable and enhances the strength.

### <Fourth Modification>

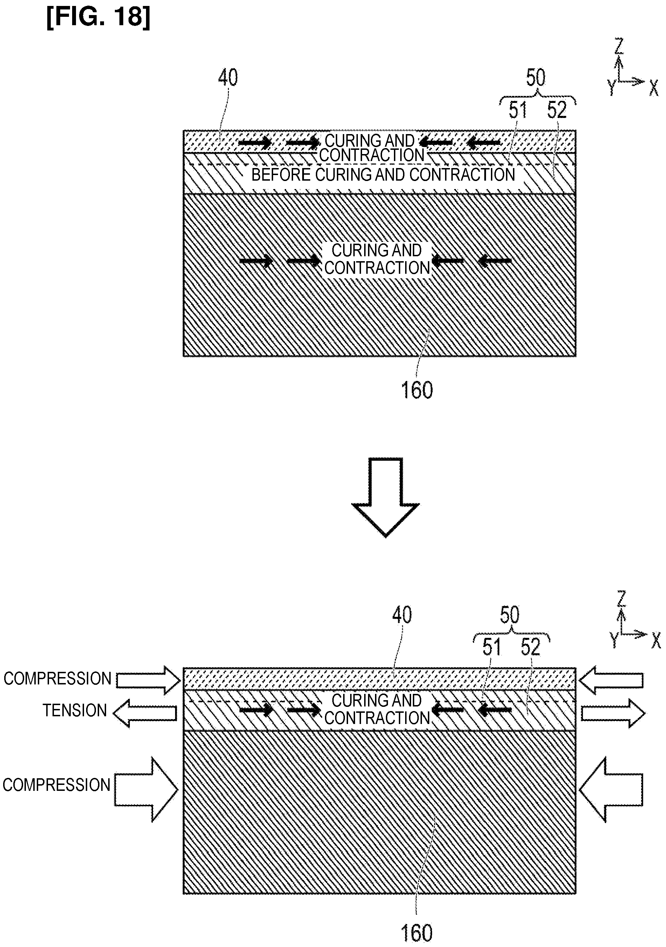

Figure 18 is a schematic cross-sectional view for explaining the metal-supported cell manufacturing method according to a fourth modification. The metal-supported cell according to the fourth modification differs from the embodiment described above in that the electrolyte layer 40 and the metal support layer 160 cure and contract first, and the anode layer 50 cures and contracts last.

By means of the manufacturing method described above, it is possible to apply compressive residual stress to the electrolyte layer 40 and the metal support layer 160. Since the anode layer 50 has a metal skeleton resistant to tensile residual stress, it may bear the tensile residual stress. In addition, since the overall stress distribution of the metal-supported cell is almost symmetrical, it is possible to reduce the amount of warpage of the metal-supported cell as a whole.

### (Modification of a Method for Controlling the Timing of Firing and Curing)

In the embodiment described above, the amount of the sintering aid is adjusted to control the timing of firing and curing, but the method for controlling the timing of firing and curing is not limited to this method. For example, a method for adjusting the amount of a sintering inhibitor in each layer, a method for controlling the firing and curing temperature, thermal conductivity, rate of temperature increase, etc., of each layer, a method for controlling the firing temperature of each layer depending on the manufacturing requirements, or the like may also be used. In the following fifth to the seventh modifications, several of the above-described methods will be described.

### <Fifth Modification>

In the metal-supported cell manufacturing method according to the fifth modification, the amount of sintering inhibitor (retarding) agent in each layer is adjusted, in order to control the timing of firing and curing. In the slurry preparation step, the sintering inhibitor is added to each slurry instead of the sintering aid. The timing at which each layer is fired and cured can be controlled by adjusting the amount of the sintering inhibitor.

Specifically, the amount of the sintering inhibitor is adjusted so that the electrolyte slurry < first anode slurry < second anode slurry < first metal support slurry, and second metal support slurry < first metal support slurry. As a result, it is possible to cause curing and contraction in the firing step in the following order: electrolyte slurry → first anode slurry → second anode slurry → first metal support slurry, and second metal support slurry → first metal support slurry, in the same manner as is the case in the above-described embodiment.

### <Sixth Modification>

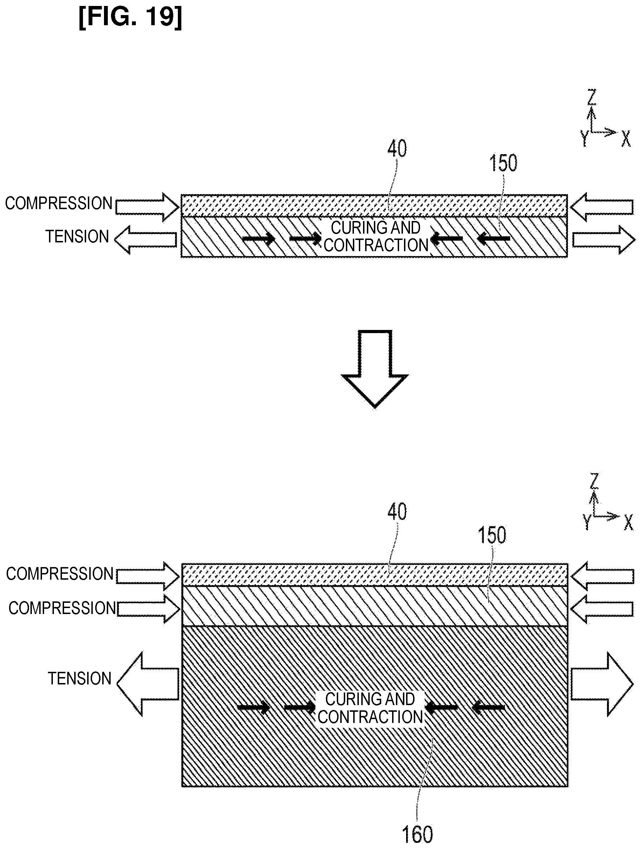

Figure 19 is a schematic cross-sectional view for explaining the metal-supported cell manufacturing method according to a sixth modification. In the metal-supported cell manufacturing method according to the sixth modification, firing and laminating are repeated in the firing step to bake each layer in layers in order to control the timing of firing and curing.

First, the electrolyte layer 40 is overlaid on and laminated to the anode layer 50 and baked. The fired and cured electrolyte layer 40 and anode layer 50, which have been stacked and baked, are then overlaid on and laminated to the metal support layer 160 and baked.

Thus, it is possible to fire and cure the metal support layer 160 after the electrolyte layer 40 and the anode layer 50. As a result, the compressive residual stress can be retained in the ceramic layers (electrolyte layer 40 and anode layer 50) as a whole.

### <Seventh Modification>

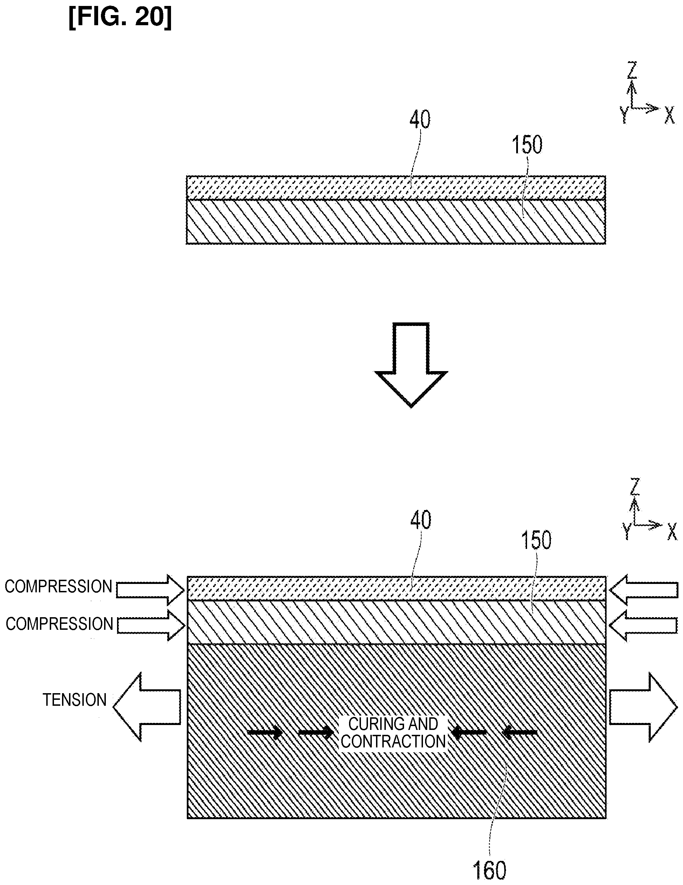

Figure 20 is a schematic cross-sectional view for explaining the metal-supported cell manufacturing method according to a seventh modification. In the metal-supported cell manufacturing method according to the seventh modification, the PVD (physical vapor deposition) method is used in order to control the timing of firing and curing.

First, the anode layer 50 is first fired and cured. Then the electrolyte layer 40 is formed on the fired and cured anode layer 50 by means of a PVD step. Finally, the electrolyte layer 40 and the anode layer 50 are laminated on a metal support slurry and fired to form the metal support layer 160. As a result, the compressive residual stress can be applied to the ceramic layers (electrolyte layer 40 and anode layer 50) as a whole.

The metal-supported cell and the metal-supported cell manufacturing method according to the present invention has been described above by means of embodiments and modifications; however, the present invention is not limited to the content described in the embodiments, and may be appropriately modified based on the descriptions of the Claims.

For example, the method for generating compressive residual stress in the electrolyte layer is not limited to the method for adjusting the timing of the firing and curing and the linear expansion coefficient (CTE). For example, compressive residual stress may be generated in the electrolyte layer by means of surface treatment such as surface quenching and shot peening.

In addition, in the embodiment described above, the timing of firing and curing is controlled in order to control the internal stress, but the firing contraction rate can be further adjusted. Based on the assumption that the timing of firing and curing is controlled as described in the embodiment above, it is possible to apply a larger compressive residual stress to the ceramic layers (electrolyte layer and anode layer) by setting the relationship of the firing contraction rates so that the contraction rate of electrolyte layer < contraction rate of anode layer < contraction rate of metal support layer. The firing contraction rate can be controlled by adjusting the amount of binder and the particle diameters of the materials of each slurry

In addition, the arrangement of the laminations of the anode layer and the cathode layer may be switched. In this case, the cathode layer can have the same configuration as the anode layer of the above-described embodiment and modifications.

The present application is based on Japanese Patent Application No. 2018-077551 filed on April 13, 2018, and the contents disclosed therein have been referenced and fully incorporated herein.

### Descriptions of the Reference Symbols

- 1: Fuel cell stack,
- 1U: Cell unit,
- 1A: Metal-supported cell assembly,
- 10: Metal-supported cell,
- 20: Electrolyte electrode assembly,
- 30: Cathode layer,
- 40: Electrolyte layer,
- 50, 150: Anode layer,
- 51: First anode layer,
- 52: Second anode layer,
- 60, 160: Metal support layer,
- 61: First metal support layer,
- 62: Second metal support layer,
- 113: Cell frame,
- 120: Separator,
- 130: Auxiliary collector layer,
- 210: Ceramic particles,
- 220: Metal particles.

## Claims

1. A metal-supported cell comprising:
a plurality of layers including an electrolyte layer, an electrode layer and a metal support layer that are stacked,
the electrolyte layer having a compressive residual stress along a planar direction, and
at least one of the plurality of layers other than the electrolyte layer having a tensile residual stress along the planar direction.

2. The metal-supported cell according to claim 1, wherein at least one of the electrode layer and the metal support layer has a tensile residual stress along the planar direction.

3. The metal-supported cell according to claim 1 or 2, wherein at least one of the electrode layer and the metal support layer has a compressive residual stress along the planar direction.

4. The metal-supported cell according to any one of claims 1 to 3, wherein
the metal support layer includes a plurality of layers,
at least a surface layer of the plurality of layers of the metal support layer has a compressive residual stress along the planar direction, and
layers other than the surface layer of the plurality of layers of the metal support layer has a tensile residual stress along the planar direction.

5. The metal-supported cell according to any one of claims 1 to 4, wherein a linear expansion coefficient relationship is such that a linear expansion coefficient of the electrolyte layer is less than a linear expansion coefficient of the electrode layer which is less than a linear expansion coefficient of the metal support layer..

6. A metal-supported cell manufacturing method comprising:
stacking a plurality of layers including an electrolyte layer, an electrode layer and a metal support layer;
applying a compressive residual stress to the electrolyte layer along a planar direction; and
applying a tensile residual stress along the planar direction to at least one layer of the plurality of layers other than the electrolyte layer.

7. The metal-supported cell manufacturing method according to claim 6, wherein the tensile residual stress along the planar direction is applied to at least one of the electrode layer and the metal support layer.

8. The metal-supported cell manufacturing method according to claim 6 or 7, wherein the compressive residual stress along the planar direction is applied to at least one of the electrode layer and the metal support layer.

9. The metal-supported cell manufacturing method according to any one of claims 6 to 8, wherein
the metal support layer includes a plurality of layers,
a compressive residual stress along the planar direction is applied to at least a surface layer of the plurality of layers of the metal support layer, and
a tensile residual stress along a planar direction is applied to layers other than the surface layer of the plurality of layers of the metal support layer.

10. The metal-supported cell manufacturing method according to any one of claims 6 to 9, wherein a linear expansion coefficient relationship is such that a linear expansion coefficient of the electrolyte layer is less than a linear expansion coefficient of the electrode layer which is less than a linear expansion coefficient of the metal support layer.

11. The metal-supported cell manufacturing method according to any one of claims 6 to 10, wherein
firing at least one of the electrolyte layer, the electrode layer and the metal support layer is fired to cure and contract in order to apply the compressive residual stress to a layer adjacent to the fired layer, and
the tensile residual stress is applied to the fired layer as a reaction force against the compressive residual stress.

12. The metal-supported cell manufacturing method according to claim 11, wherein the firing is carried out sequentially in the electrode layer and the electrolyte layer from a far side to a near side of the metal support layer in a stacking direction.

13. The metal-supported cell manufacturing method according to claim 11 or 12, wherein the metal support layer is fired after the electrode layer and the electrolyte layer.

14. The metal-supported cell manufacturing method according to any one of claims 11 to 13, wherein the firing is carried out sequentially in the metal support layer from a far side to a near side of the electrolyte layer in a stacking direction.

15. The metal-supported cell manufacturing method according to any one of claims 11 to 14, wherein
the electrode layer includes
a first electrode layer including a ceramic and a catalyst, and
a second electrode layer that is disposed closer to a metal support layer side than the first electrode layer, and that includes a ceramic, a metal and a catalyst, and
the firing is carried out in a following order: the electrolyte layer, the first electrode layer, the second electrode layer, and the metal support layer.
